# EUROPÄISCHE PATENTSCHRIFT

(11) **EP 1 439 978 B1**
(45) Veröffentlichungstag und Bekanntmachung des Hinweises auf die Patenterteilung: **24.01.2007**
(21) Anmeldenummer: 02767122.1
(22) Anmeldetag: 23.08.2002
(51) Int. Cl.: B60N 2/02, B60N 2/44, B62D 3/06, F16H 25/24

(54) **GETRIEBE-ANTRIEBSEINHEIT MIT EINEM ADAPTER**
GEAR DRIVE UNIT PROVIDED WITH AN ADAPTER
UNITE D'ENTRAINEMENT A ENGRENAGE MUNIE D'UN ADAPTATEUR

(30) Priorität: 23.10.2001 DE 10151555; 13.07.2002 DE 10231746
(43) Veröffentlichungstag der Anmeldung: 28.07.2004
(73) Patentinhaber: ROBERT BOSCH GMBH, 70442 Stuttgart (DE)
(72) Erfinder: WINTER, Manfred, 77839 Lichtenau (DE); PETER, Gilles, F-67500 Haguenau (FR); LIENIG, Andreas, 77815 Buehl (DE)
(86) Internationale Anmeldenummer: PCT/DE2002/003092
(87) Internationale Veröffentlichungsnummer: WO 2003/037674

(56) Entgegenhaltungen:
- EP-A- 0 759 374
- DE-A- 2 209 876
- DE-A- 3 421 273
- DE-C- 19 647 544
- US-A- 3 831 460
- US-A- 4 310 144

## Beschreibung

Die Erfindung betrifft eine Getriebe-Antriebseinheit, insbesondere für eine Sitzverstellung oder Servolenkung im Kraftfahrzeug, nach der Gattung des Hauptanspruchs.

Aus der EP 0 759 374 A2 ist eine Vorrichtung zum Verstellen eines Sitzes im Kraftfahrzeug bekannt, die gegenüber einem Normalbetrieb erheblich größere Kräfte - wie sie beispielsweise bei einem Verkehrsunfall verursacht werden - aufnehmen kann. Hierbei wird eine Gewindespindel über ein Schneckengetriebe von einem Elektromotor angetrieben, der fest mit dem Sitz verbunden ist. Das Getriebegehäuse des Schneckengetriebes ist aus Kunststoff gefertigt und mittels eines zusätzlichen metallischen U-förmigen Stützbügels gegenüber einem Losreißen von der Gewindespindel - beispielsweise bei einem Auffahrunfall - gesichert. Weiter ist die Gewindespindel in einer Gewindemutter drehbar geführt, die über ein Lagerbock fest mit einem gestellfesten Bauteil der Verstellvorrichtung verbunden ist. Bei einem Crash besteht bei dieser Vorrichtung weiterhin die Gefahr, dass die aus Kunststoff gefertigte Gewindemutter zerstört wird und sich der Sitz mit der Antriebseinheit und der Spindel von der Karosserie löst. Außerdem ist es für die Verwendung desselben Spindelantrieb für verschiedene Verstellanwendungen sehr umständlich, die Gewindemutter der jeweiligen Lagerung in der Verstellvorrichtung anzupassen. Eine solche geometrische Veränderung der Kunststoff-Mutter beeinflusst deren mechanische Belastbarkeit nachhaltig, wodurch deren Anpassung an die jeweilige Verstelleinheit erschwert wird.

Mit der US-A-3831460 ist ein Spindelantrieb mit einer Gewindemutter bekannt geworden, deren geometrische Ausformung ein Gewindespiel zwischen der Spindel- und der Gewindemutter unterbinden soll. Die Gewindemutter weist an einem Ende ein Außengewinde auf, auf dem eine Hülse aufgeschraubt ist, die mit einem Maschinenteil verbunden ist.

Vorteile der Erfindung

Die erfindungsgemäße Getriebe-Antriebseinheit mit den Merkmalen des Anspruchs 1 hat den Vorteil, dass der hülsenförmige Adapter, der die Spindelmutter umgreift, verhindert, dass diese bei einem Auffahrunfall zerstört wird. Das Gewinde zwischen dem Adapter und der Spindelmutter kann sehr hohe axiale Kräfte aufnehmen, sodass die Spindelmutter auch bei einem Crash nicht aus dem Adapter herausgerissen wird, und daher das zu verstellende Teil auch bei starker Krafteinwirkung immer mit der Karosserie fest verbunden bleibt.

Ein weiterer Vorteil der Erfindung besteht darin, die Spindelmutter für verschiedene Verstellvorrichtung immer gleich auszubilden, und lediglich den Adapter konstruktiv zur Anbindung an die Verstelleinheit entsprechend anzupassen. Da der Adapter eine höhere mechanische Stabilität aufweist als die Spindelmutter, ist eine solche Anpassung mittels des Adapters mit einem gleichbleibenden Normgewinde an dessen einem Ende weit einfacher zu realisieren, als eine Anpassung der Spindelmutter. Da für alle Verstellvorrichtungen immer die gleiche Spindelmutter verwendet werden kann, ist es nicht notwendig, für jede Anwendung ein neues Spezialgewinde mittels Spezialwerkzeugen zwischen Spindelmutter und Spindel herzustellen, da die Schnittstelle zwischen Getriebe-Antriebseinheit und Verstelleinheit durch das einfach herstellbare Normgewinde zwischen den Adapter und der Spindelmutter gebildet wird.

Durch die in den Unteransprüchen angegebenen Maßnahmen sind vorteilhafte Weiterbildung der Vorrichtung nach der Anspruch 1 möglich. Bei einem Crash wirken die höchsten Kräfte in axialer Richtung entlang der Spindel. Deshalb ist der aufgeschraubte Adapter derart mit der Spindelmutter verbunden, dass eine Längsverschiebung desselben verhindert wird. Dies geschieht vorteilhafter Weise durch eine form- oder kraftschlüssige Verbindung in Längsrichtung der Spindelmutter.

Aufgrund des Gewindes zwischen Adapter und Spindelmutter kann auch durch eine Drehsicherung des Gewindes verhindert werden, dass der Adapter sich von der Spindelmutter löst. Dabei können verschiedene form- oder kraftschlüssige Gewindesicherung verwendet werden.

In einer vorteilhaften Ausführung weist hierzu die Spindelmutter Vertiefungen auf, in welche nach dem Aufschrauben des Adapters Fortsätze desselben in Eingriff gebracht werden. Besonders günstig ist die Anformung mehrerer solche Aussparungen gleichmäßig über den Umfang verteilt, da hierdurch ein größeres Drehmoment übertragen werden kann. Ebenso können durch eine formschlüssige Verbindung in Drehrichtung, beispielsweise durch radiale Seitenwände der Aussparungen, höhere Kräfte übertragen werden. Diese Aussparungen in der Spindelmutter dienen gleichzeitig dem Eingriff eines Montagewerkzeugs, mit welchem der Adapter auf die Spindelmutter aufgeschraubt wird.

Ist an der Spindelmutter eine umlaufende Ringnut angeformt, in die beispielsweise ein umlaufender Kragen des Adapters eingestemmt wird, so ist der Adapter in Verbindung mit dessen Gewinde ebenfalls wirkungsvoll gegen ein Verschieben und Verdrehen gegenüber der Spindelmutter gesichert. Weist die Spindelmutter einen axialen Anschlag für den Adapter auf, so wird durch dessen elastische Materialeigenschaften die Bewegung des zu verstellenden Teils gedämpft. Außerdem kann durch solche Anschläge, die beispielsweise durch die beiden axialen Seitenwände einer Ringnut gebildet werden, in Verbindung mit dem Innengewinde des Adapters eine kraftschlüssige Dreh- und Verschiebesicherung realisiert werden.

Besonders günstig ist es, wenn in die Ausformungen der Spindelmutter laschenartige Ausformungen des Adapters verstemmt werden, da hierzu keine zusätzlichen Bauteile notwendig sind. Solche Laschen können sehr einfach durch Einschnitte am axialen Ende des Adapters erzeugt werden. Ist der Adapter beispielsweise aus Stahl gefertigt, können die Laschen verfahrensmäßig günstig plastisch verformt werden und hohe Drehmomente aufnehmen.

Zur Begrenzung des Verstellweges ist auf der Spindel mindestens ein scheibenförmiges Anschlagelement angeordnet, das gleichzeitig auch zur Abstützung und zur Führung des hülsenförmigen Adapters dient. Dadurch können bei einem Crash auch hohe radiale Kräfte aufgenommen werden.

Durch die Kombination der Spindelmutter mit dem Adapter ist deren Adaptionsfunktion in einfacherer und weitreicherer Weise zu realisieren, als die Schnittstelle bisher, direkt durch die Spindelmutter. Hierbei wird das Material und die innere Geometrie der bestehenden Spindelmutter übernommen. Um diese herum wird ein Metallmantel gelegt, an dem eine beliebige Kontur angebracht ist, die für die Adaption in eine Verstelleinheit erforderlich ist. Der Kunststoffkern mit Metallmantel bewirkt einerseits eine höhere Festigkeit des Aufbaus als die Kunststoffmutter alleine, und andererseits bessere Gleiteigenschaften zwischen Spindelmutter und Spindel verglichen mit einer Metallmutter. Der Metallmantel des Adapters erhöht nicht nur die mechanische Stabilität, sondern bietet auch eine weit höhere Variabilität, um dessen Kontur den Bauteilen der Verstelleinheit anzupassen, mit denen der Adapter verbunden wird. Des weiteren kann das Innengewinde in die Metallhülse günstig mit Normwerkzeugen gefertigt werden.

Durch die Verlegung der Schnittstelle zwischen Spindelmutter und Adapter wird eine höhere Flexibilität für den Einsatz der Getriebe-Antriebseinheit reicht, dass die gleichbleibende, und dadurch in großen Stückzahl gefertigte Spindelmutter, in jede beliebige Adapterausführung montiert werden kann, die über eine passende Schnittstelle, gebildet durch das Normgewinde zwischen Spindelmutter und Adapter verfügt. Durch die Anwendung dieses Baukastenprinzips können bis auf die Spindelmutter alle bisherigen verwendeten Bauteile der Getriebe-Antriebseinheit, wie beispielsweise Gehäuse, Spindel oder Anschlagselemente weiterhin verwendet werden.

### Zeichnung

In der Zeichnung sind Ausführungsbeispiele einer erfindungsgemäßen Vorrichtung dargestellt und in den nachfolgenden Beschreibung näher erläutert.

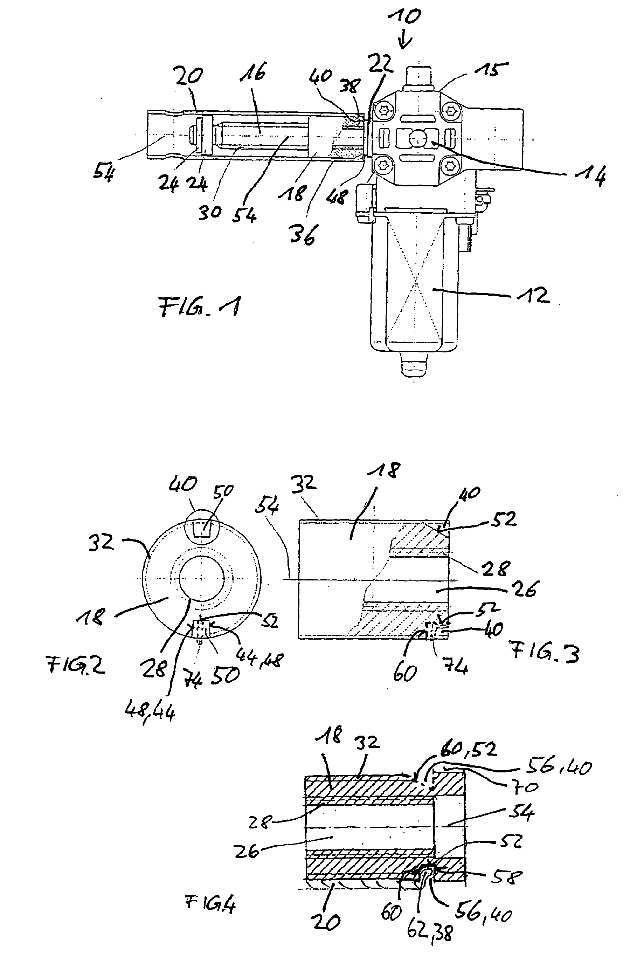

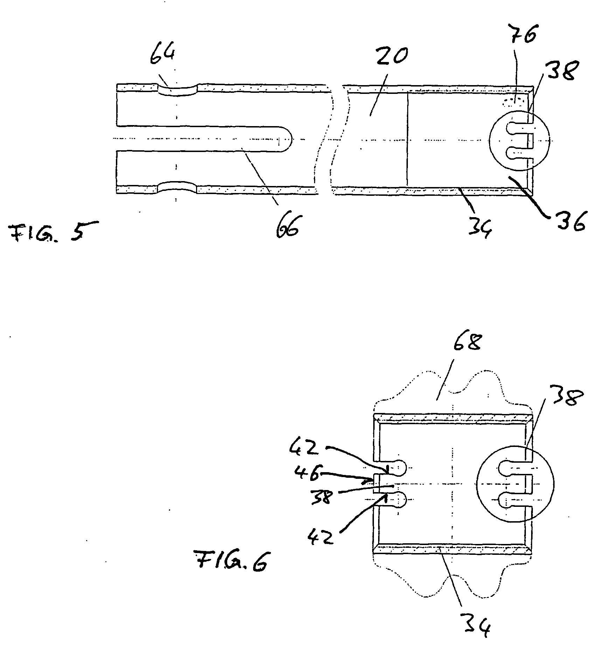

Es zeigen Figur 1 ein Ausführungsbeispiel einer Sitzverstellvorrichtung, Figur 2 und 3 Ansichten der Spindelmutter gemäß Figur 1, Figur 4 den Schnitt einer weiteren Ausführung einer Spindelmutter, Figur 5 den Schnitt durch ein Adapter gemäß Figur 1 und Figur 6 ein weiteres Ausführungsbeispiel eines Adapters im.Schnitt.

### Beschreibung der Ausführungsbeispiele

Das in Figur 1 dargestellte Ausführungsbeispiel zeigt ein erfindungsgemäße Getriebe-Antriebseinheit 10 im Überblick, bei der ein Elektromotor 12 über ein Schneckengetriebe 14 eine Spindel 16 antreibt, die aus einem das Schneckengetriebe 14 umfassenden Getriebegehäuse 15 ragt. Die Getriebe-Antriebseinheit 10 ist beispielsweise zusammen mit dem Elektromotor 12 und dem Getriebegehäuse 15 direkt oder indirekt fest mit der Karosserie verbunden. Auf der Spindel 16 ist eine Spindelmutter 18 gelagert, die über ein Adapter 20 mit einem Sitzgestell bzw. einem beweglichen Teil des Sitzes verbunden ist. Alternativ ist es auch möglich, den Adapter 20 an der Karosserie zu fixieren und die Getriebe-Antriebseinheit am Fahrzeugsitz zu befestigen, oder auch den Adapter 20 und die Getriebe-Antriebseinheit 10 jeweils an zwei gegeneinander beweglichen Teile zu befestigen. Zur Verstellung eines am Adapter 20 befestigten beweglichen Teils wird die mit dem Adapter 20 dreh- und verschiebefest verbundene Spindelmutter 18 auf der über das Schneckengetriebe 14 angetriebenen Spindel 16 zwischen einem ersten axialen Anschlag 22 am Getriebegehäuse 15 und einem zweiten axialen Anschlagelement 24 verschoben. Die Spindelmutter 18 weist an einer zentralen Bohrung 26 ein Innengewinde 28 auf, das in ein Außengewinde 30 der Spindel 16 greift. An der radialen Außenseite der Spindelmutter 18 ist ein Außengewinde 32 angeformt, das wiederum in ein Innengewinde 34 des Adapters 20 greift. Der Adapter 20 ist über die gesamte axiale Länge des Außengewindes 32 aufgeschraubt und weist an dessen Ende 36 zum Getriebegehäuse 15 hin laschenartige Ausformungen 38 auf, die in Aussparungen 40 der Spindelmutter 18 eingeprägt sind. Die laschenartige Fortsätze 38 liegen mit ihren Seitenkanten 42 an den radial ausgerichteten Seitenwänden 44 der Aussparungen 40 und mit ihrer Stirnseite 46 an einem radialen Anschlag 48 der Spindelmutter 18 an.

In Figur 2 und Figur 3 sind zwei Varianten der Spindelmutter 18 dargestellt, die zwei sich gegenüberliegenden Aussparungen 40 im Außengewinde 32 aufweisen. Die Aussparungen 40 erstrecken sich axial ausgehend vom Ende 36 zum Getriebegehäuse 15 hin, nur über einen Teilbereich der Spindelmutter 18. Die in Figur 2 dargestellte Spindelmutter 18 besteht aus Kunststoff und hat im wesentlichen eine zylindrische Form. Auf ihrer Außenkontur befindet sich ein Feingewinde 32, welches die Schnittstelle (Normgewinde) zu den verschiedenen möglichen Adaptern 20 darstellt. Figur 2 zeigt des weiteren das in etwa rechteckförmige Profil der als axialen Nut ausgeführten Aussparung 40. In Figur 3 ist dargestellt, dass die Aussparung 40 einen schräg zur Achsrichtung 54 verlaufende Bodenfläche 52 aufweist, an die sich die eingepresste laschenartige Ausformung 38 gemäß Figur 1 anschmiegt. In einer Variation kann die Aussparung 40 jedoch auch eine Bodenfläche 52 aufweisen, die in etwa parallel zur Spindelmutterachse 54 verläuft, wie dies in Figur 3 gestrichelt eingezeichnet ist.

Die Tiefe und Länge der Nuten sowie deren Anzahl und Positionierung über das Außengewinde 32 der Spindel 18 ist von der Belastung und der Montage einer solche Verdrehsicherung abhängig.

Anstatt in axialer Richtung kann die nutförmige Aussparung 40 auch als Ringnut 56 ausgebildet sein, die die Spindelmutter 18 teilweise oder vollständig umschließt. In Figur 4 ist eine Aussparung 40 als Ringnut 56 ausgebildet, deren beiden axialen Seitenwände 58 und 60 zwei axiale Anschläge 48 für den Adapter 20, insbesondere für dessen laschenartigen Fortsatz 38 der in diesem Ausführungsbeispiel als umlaufender Kragen 62 ausgebildet ist, dar. Auch bei einer umlaufenden Ringnut 56 ist die Bodenfläche 52 in einem Ausführungsbeispiel in etwa parallel zur Spindelmutterachse 54 ausgerichtet, oder in einer gestrichelt gezeichneten Ausführungsvariante ist die Bodenfläche 52 zusammen mit der zweiten Seitenfläche 60 als zur Spindelmutterachse 54 geneigte Fläche ausgebildet. Die Ausführungsbeispiele nach Figur 4 weisen somit in Drehrichtung keinen Formschluss auf, sondern lediglich in axialer Richtung 54. Da jedoch die eingeprägte laschenartige Ausformung 38 in beiden axialen Richtung an den Anschlägen 58 und 56 anliegt, wird sowohl ein axiales Verschieben, als auch ein Verdrehen des Adapters 20 in Verbindung mit dem Außengewinde 32 verhindert.

Figur 5 zeigt einen Adapter 20 dessen Innengewinde 34 sich in etwa über den axialen Bereich erstreckt, der der axialen Länge der Spindelmutter 18 entspricht. Das Innengewinde 34 ist als normiertes Feingewinde ausgebildet, das mit herkömmlichen Werkzeugen gefertigt wird. An einem Ende 36 zum Getriebegehäuse 15 hin ist einstückig ein laschenartiger Fortsatz 38 angeformt, der mit einem korrespondierenden Aussparung 40 der Spindelmutter 18 verprägt wird. Durch das formschlüssige Eingreifen dieser Verstemmlaschen 38 wird ein Verdrehen des Adapters 20 gegenüber der Spindelmutter 18 verhindert. Die Länge und geometrische Form des Adapters 20 ist jeweils der Anbindung der verschiedenen Verstelleinheiten angepasst. So weist die in Figur 5 dargestellte Ausführungsform beispielsweise eine durchgehende Bohrung 64 auf, die einen nicht dargestellten Bolzen aufnimmt, um den Adapter 20 beispielsweise am Sitzgestell zu befestigen. Des weiteren weist der Adapter 20 Schlitze 66 in der Hülse auf, damit der hülsenförmige Adapter 20 leichter auf ein entsprechendes Innenrohr der Verstelleinheit gepresst werden kann. Die Ausführung und Anzahl der Ausformungen 38, sowie ihre Positionierung ist von der Belastung und der Montage der Verdrehsicherung abhängig. Bei der metallischen Ausführung des Adapters 20 lassen sich die Laschen 38 einfach plastisch verformen. In einer Variation sind die Ausformungen 38 als elastische Elemente ausgeführt, die bei der Montage ohne weiteren Verfahrensschritt in die Aussparung 40 der Spindelmutter 18 greifen.

In Figur 6 ist ein weiteres Ausführungsbeispiel des Adapters 20 dargestellt, dessen axiale Länge in etwa der Länge der Spindelmutter 18 entspricht. Hierbei sind an beiden axialen Enden laschenartige Fortsätze 38 angeformt, die in entsprechenden Aussparung 40 an beiden axialen Enden der Spindelmutter 18 eingreifen. Zur Kupplung des Adapters 20 an eine Verstelleinheit ist in radialer Richtung 54 eine beliebige Kontur angeformt, die der jeweilige Anwendung angepasst ist.

Zum Aufschrauben der Spindelmutter 18 auf die Spindel 16, sowie des Adapters 20 auf die Spindelmutter 18 greifen Montagewerkzeuge in die Aussparungen 40. In einer Ausführungsform der Spindelmutter 18 gemäß Figur 3 weist diese an der Umfangsfläche 70 der Spindelmutter 18 ein Profil, beispielsweise zwei parallele Flächen ein 4-, 6- oder Mehrkant- Profil auf, so dass die Spindelmutter 18 wie ein Schraubenkopf auf die Spindel 16 oder in den Adapter 20 geschraubt werden kann. In Figur 4 ist der Anschlag 58 mit dem Außenprofil 70 einstückig mit der Spindelmutter 18 aus Kunststoff geformt.

In weiteren Ausführungsbeispielen kann die Verdrehsicherung zwischen Spindelmutter 18 und Adapter 20 auch durch separate Sicherungselemente realisiert werden. So ist es beispielsweise möglich, in die Ringnut 56 eine Sicherungsfeder, beispielsweise eine Speed nut, einzulegen, die den Adapter 20 radial gegenüber der Spindelmutter 18 verklemmt. Des weiteren können Federelemente 74 in die Aussparung 40 eingelegt werden, die nach der Montage in entsprechende Ausformungen 76 im Adapter 20 eingreifen. Eine weitere Möglichkeit besteht darin, die beiden Bauteile 18 und 20 entweder direkt oder mit Hilfe eines Verbindungselements zu verkleben oder zu verschweißen. In einer weiteren Variation wird die Spindelmutter 18 mittels SpritzgussVerfahren drehfest mit der hülsenförmigen Adapter 20 verbunden.

Die Ausführungsbeispiele erläutern die Erfindung zwar anhand einer Sitzverstellung, jedoch ist auch für andere Verstellbewegungen, beispielsweise an der Lenksäule einsetzbar, bei denen beim Aufdrehen hoher Kräfte verhindert werden soll, dass sich das zu verstellende Teil von der Spindel 16 löst. So ist der Spindelantrieb 10 auch für Anwendungen denkbar, bei denen die Getriebe-Antriebseinheit 10 oder der Adapter 20 karosseriefest, oder beide Komponenten an sich relativ zueinander beweglichen Teilen befestigt sind. Auch eine Kombination der einzelnen Merkmale der verschiedene Ausführungsbeispiele, sowie einzelne Merkmale der Ausführungsbeispiele realisieren eine erfindungsgemäße Getriebe-Antriebseinheit 10.

## Patentansprüche

1. Getriebe-Antriebseinheit (10), insbesondere für eine Sitzverstellung oder eine Servolenkung, mit einer Spindel (16), einer Spindelmutter (18) und einem Adapter (20), der mit einer Verstelleinheit koppelbar ist, wobei der Adapter (20) als Hülse mit einem Innengewinde (34) ausgebildet ist, das in ein Außengewinde (32) der Spindelmutter (18) greift, **dadurch gekennzeichnet, daß** die Spindelmutter (18) mindestens einen axialen Anschlag (58, 60) für den Adapter (20) aufweist.

2. Getriebe-Antriebseinheit (10) nach Anspruch 1, **dadurch gekennzeichnet, dass** der Adapter (20) gegen einer Längsverschiebung auf der Spindelmutter (18) gesichert ist.

3. Getriebe-Antriebseinheit (10) nach einem der Ansprüche 1 oder 2, **dadurch gekennzeichnet, dass** der Adapter (20) drehfest auf der Spindelmutter (18) befestigt ist.

4. Getriebe-Antriebseinheit (10) nach einem der Ansprüche 1 bis 3, **dadurch gekennzeichnet, dass** die Spindelmutter (18) mindestens eine Aussparung (40, 56) aufweist, in die mindestens eine Ausformung (38, 62) des Adapters (20) eingreift.

5. Getriebe-Antriebseinheit (10) nach einem der Ansprüche 1 bis 4, **dadurch gekennzeichnet, dass** mehrere Aussparungen (40, 56) mit radialen Seitenwänden (44) - insbesondere etwa gleichmäßig verteilt - über den Umfang der Spindelmutter (18) angeordnet sind.

6. Getriebe-Antriebseinheit (10) nach einem der Ansprüche 1 bis 5, **dadurch gekennzeichnet, dass** an der Spindelmutter (18) mindestens eine ringnutförmige Aussparung (56) angeordnet ist, die sich über den gesamten Umfang der Spindelmutter (18) erstreckt.

7. Getriebe-Antriebseinheit (10) nach einem der Ansprüche 1 bis 6, **dadurch gekennzeichnet, dass** die Spindelmutter (18) mindestens einen axialen Anschlag (58, 60) für die mindestens eine Ausformung (38, 62) des Adapters (20) aufweist.

8. Getriebe-Antriebseinheit (10) nach einem der Ansprüche 1 bis 7, **dadurch gekennzeichnet, dass** die mindestens eine Ausformung (38, 62) als plastisch oder elastisch verformbarer Fortsatz (38, 62) am Adapter (20) ausgebildet ist.

9. Getriebe-Antriebseinheit (10) nach einem der Ansprüche 1 bis 8, **dadurch gekennzeichnet, dass** die Spindel (16) mindestens ein axiales, vom Adapter (20) umschlossenes Anschlagelement (22) für die Spindelmutter (18) aufweist.

10. Getriebe-Antriebseinheit (10) nach einem der Ansprüche 1 bis 9, **dadurch gekennzeichnet, dass** die Spindelmutter (18) aus Kunststoff und der Adapter (20) aus Metall gefertigt ist.

11. Getriebe-Antriebseinheit (10) nach einem der Ansprüche 1 bis 10, **dadurch gekennzeichnet, dass** der Adapter (20) zur Kopplung mit unterschiedlichen Verstelleinheiten an seinem einen Ende (36) immer ein genormtes Innengewinde (34) zum Aufschrauben auf die Spindelmutter (18) aufweist, und das andere Ende jede beliebige geometrische Form (64, 66, 68) zur Anbindung an die entsprechende Verstelleinheit annehmen kann.

12. Getriebe-Antriebseinheit (10) nach einem der Ansprüche 1 bis 11, **dadurch gekennzeichnet, dass** eine Drehsicherung zwischen dem Adapter (20) und der Spindelmutter (18) mittels mindestens eines separaten Sicherungselements (72, 74) oder mittels Spritzgussverfahren erzeugt wird.

## Claims

1. Gear drive unit (10), in particular for a seat-adjusting means or a power steering system, with a spindle (16), a spindle nut (18) and an adapter (20) which can be coupled to an adjustment unit, the adapter (20) being designed as a sleeve with an internal thread (34) which engages in an external thread (32) of the spindle nut (18), **characterized in that** the spindle nut (18) has at least one axial stop (58, 60) for the adapter (20).

2. Gear drive unit (10) according to Claim 1, **characterized in that** the adapter (20) is secured against longitudinal displacement on the spindle nut (18).

3. Gear drive unit (10) according to either of Claims 1 and 2, **characterized in that** the adapter (20) is fastened in a rotationally fixed manner on the spindle nut (18).

4. Gear drive unit (10) according to one of Claims 1 to 3, **characterized in that** the spindle nut (18) has at least one cut-out (40, 56) in which at least one formation (38, 62) of the adapter (20) engages.

5. Gear drive unit (10) according to one of Claims 1 to 4, **characterized in that** a plurality of cut-outs (40, 56) having radial side walls (44) are arranged - in particular distributed approximately uniformly - over the circumference of the spindle nut (18).

6. Gear drive unit (10) according to one of Claims 1 to 5, **characterized in that** at least one cut-out (56) in the form of an annular groove is arranged on the spindle nut (18) and extends over the entire circumference of the spindle nut (18).

7. Gear drive unit (10) according to one of Claims 1 to 6, **characterized in that** the spindle nut (18) has at least one axial stop (58, 60) for the at least one formation (38, 62) of the adapter (20).

8. Gear drive unit (10) according to one of Claims 1 to 7, **characterized in that** the at least one formation (38, 62) is formed on the adapter (20) as a plastically or elastically deformable extension (38, 62).

9. Gear drive unit (10) according to one of Claims 1 to 8, **characterized in that** the spindle (16) has at least one axial stop element (22), which is surrounded by the adapter (20), for the spindle nut (18).

10. Gear drive unit (10) according to one of Claims 1 to 9, **characterized in that** the spindle nut (18) is manufactured from plastic and the adapter (20) is manufactured from metal.

11. Gear drive unit (10) according to one of Claims 1 to 10, **characterized in that** the adapter (20), for coupling to different adjustment units, always has, at its one end (36), a standardized internal thread (34) for screwing onto the spindle nut (18), and the other end can assume any desired geometrical shape (64, 66, 68) for connection to the corresponding adjustment unit.

12. Gear drive unit (10) according to one of Claims 1 to 11, **characterized in that** a means of securing against rotation is produced between the adapter (20) and the spindle nut (18) by means of at least one separate securing element (72, 74) or by means of an injection-moulding process.

## Revendications

1. Unité d'entraînement à engrenage (10), en particulier pour un déplacement de siège ou une servodirection, qui comporte une broche (16), un écrou de broche (18) et un adaptateur (20) pouvant être accouplé à une unité de déplacement, cet adaptateur étant constitué par une douille portant un filetage interne (34) en prise avec un filetage externe (32) de l'écrou de broche (18),
**caractérisée en ce que**
l'écrou de broche (18) présente au moins une butée axiale (58, 60) pour l'adaptateur (20).

2. Unité d'entraînement à engrenage (10) selon la revendication 1,
**caractérisée en ce que**
l'adaptateur (20) est sécurisé contre un coulissement longitudinal sur l'écrou de broche (18).

3. Unité d'entraînement à engrenage (10) selon la revendication 1 ou 2,
**caractérisée en ce que**
l'adaptateur (20) est solidaire en rotation sur l'écrou de broche (18).

4. Unité d'entraînement à engrenage (10) selon une des revendications 1 à 3,
**caractérisée en ce que**
l'écrou de broche (18) présente au moins un évidement (40, 56) dans lequel est engagée au moins une partie en saillie (38, 62) de l'adaptateur (20).

5. Unité d'entraînement à engrenage (10) selon une des revendications 1 à 4,
**caractérisée en ce que**
plusieurs évidements (40, 56) présentant des parois latérales radiales (44), sont disposés sur la périphérie de l'écrou de broche (8) en étant notamment répartis de manière à peu près régulière.

6. Unité d'entraînement à engrenage (10) selon une des revendications 1 à 5,
**caractérisée en ce que**
l'écrou de broche (18) porte au moins un évidement (56) en forme de rainure annulaire s'étendant sur toute la périphérie de l'écrou de broche (18).

7. Unité d'entraînement à engrenage (10) selon une des revendications 1 à 6,
**caractérisée en ce que**
l'écrou de broche (18) présente au moins une butée axiale (58, 60) pour au moins une partie en saillie (38, 62) de l'adaptateur (20).

8. Unité d'entraînement à engrenage (10) selon une des revendications 1 à 7,
**caractérisée en ce que**
la partie en saillie (38, 62) au nombre d'une au moins est constituée sur l'adaptateur (20) par un appendice (38, 62) déformable plastiquement ou élastiquement.

9. Unité d'entraînement à engrenage (10) selon une des revendications 1 à 8,
**caractérisée en ce que**
la broche (16) présente au moins un élément de butée (22) pour l'écrou de broche (18), disposé axialement et entouré par l'adaptateur (20).

10. Unité d'entraînement à engrenage (10) selon une des revendications 1 à 9,
**caractérisée en ce que**
l'écrou de broche (18) est en matière plastique et l'adaptateur (20) est en métal.

11. Unité d'entraînement à engrenage (10) selon une des revendications 1 à 10,
**caractérisée en ce que**
l'adaptateur (20) pour son accouplement avec des unités de déplacement différentes, présente à une extrémité (36) toujours un alésage interne normalisé (34) pour vissage sur l'écrou de broche (18), tandis que l'autre extrémité peut prendre toute forme géométrique (64, 66, 68) permettant sa liaison avec l'unité de déplacement correspondante.

12. Unité d'entraînement à engrenage (10) selon une des revendications 1 à 11,
**caractérisée en ce qu'**
une sécurité anti-rotation entre l'adaptateur (20) et l'écrou de broche (18) est réalisée au moyen d'au moins un élément de sécurité séparé (72, 74) ou par un procédé d'injection.
